Europäisches Patentamt

(19) European Patent Office    (11) Publication number: **0 051 476**

Office européen des brevets    **B1**

(12) **EUROPEAN PATENT SPECIFICATION**

(45) Date of publication of patent specification: **19.02.86**    (51) Int. Cl.⁴: **C 08 G 18/67,** C 08 G 18/10,
C 08 L 75/08, C 08 G 18/32,
C 08 F 283/00

(21) Application number: **81305191.9**

(22) Date of filing: **30.10.81**

(54) **Modified polyurethane liquid polymer compositions and their preparation.**

(30) Priority: **03.11.80 US 203212**

(43) Date of publication of application:
**12.05.82 Bulletin 82/19**

(45) Publication of the grant of the patent:
**19.02.86 Bulletin 86/08**

(84) Designated Contracting States:
**BE DE FR GB IT NL SE**

(56) References cited:
**EP-A-0 004 939
DE-A-1 916 499
DE-B-2 842 274
GB-A-1 306 372
US-A-3 448 171
US-A-3 772 404**

(73) Proprietor: **OLIN CORPORATION
350 Knotter Drive
Cheshire Connecticut 06410-0586 (US)**

(72) Inventor: **O'Connor, James Michael
8 Kenilworth Drive
Clinton Connecticut 06413 (US)**
Inventor: **Lickei, Donald Lee
38 Hallmark Drive
Wallingford Connecticut 06492 (US)**
Inventor: **Rosin, Michael Lee
77 Twilight Drive
Madison Connecticut 06443 (US)**

(74) Representative: **Thomas, Roger Tamlyn et al
D. Young & Co. 10 Staple Inn
London WC1V 7RD (GB)**

Courier Press, Leamington Spa, England.

## Description

This invention relates to urethane oligomer systems more particularly liquid polymer compositions containing a modified urethane oligomer having terminal ethylenic unsaturation.

The use of plastics materials for exterior components in automotive construction has been steadily increasing over recent years. Fuel economy requirements are continuing to dictate vehicular weight reduction, which portends even more extensive utilization of plastics.

In the area of rigid plastics automotive components, fiberglass-reinforced thermosetting polyesters have found widespread application. These polyester resin formulations have been favorably accepted due to their overall physical capabilities (e.g. dimensional stability, strength, high temperature resistance, and paint adhesion). Facility of handling and machining also has fostered favor. However, these polyester systems are still beset by certain deficiencies. The brittle nature that is characteristic of polyester compounds and composites can lead to severe impact and fatigue problems. Surface smoothness and shrinkage control have also presented formidable difficulties.

Various additives have been suggested for introduction into polyester sheet molding compounds (SMC) and bulk molding compounds (BMC) to relieve shrinkage and surface problems or to improve impact resistance. The addition of liquid polymers, such as polybutadiene (e.g., U.S. Patent No. 4,020,036) has been taught to serve well in regard to toughening polyester products; but, due to incompatibility, storage of such pre-mixes is difficult. Saturated diacids or long-chain glycols also have been used to prepare polyester resins; the resulting polyester products are more flexible but have poorer mechanical and thermal properties.

An approach relating to the introduction of urethane chemicals to a polyester resin system is described in U.S. Patent No. 4,062,826. Here, precursors of a cross-linked polyurethane are polymerized within a mixture of ethylenically unsaturated polyester and vinyl monomer to form a product with an interpenetrating polyurethane gel network within the polyester crosslinked structure. However, while higher impact stregths are reported, the fine surface finish required for automotive body part applications is still not accomplished. (G. Forger, "Toughened SMC", Plastics World, page 63, June, 1978).

The present invention results from the unexpected discovery that a heat-curable liquid polymer composition can be prepared comprising a modified urethane oligomer containing terminal ethylenic unsaturation and a free radical catalyst. The present invention provides a polyurethane liquid polymer composition comprising a urethane oligomer and a heat-activatable free-radical-generating catalyst, characterized in that the urethane oligomer has a final free NCO content from 0% to 20% and has been prepared by reacting

(a) an isocyanate-terminated prepolymer having a final free NCO content in the range from 0.5% to 30% and that is the product of reacting an organic polyisocyanate with a polyether polyol having an average equivalent weight in the range 75 to 500 and an average functionality of at least about 3, the polyether polyol having been prepared by reacting an alkylene oxide, or a mixture of alkylene oxides, with a polyhydric initiator comprising a mono- or di-saccharide or derivative thereof, with

(b) an isocyanate-reactive-group-containing (meth)acrylate monomer or isocyanate-reactive-group-containing terminally unsaturated amide monomer.

Compositions can be made in accordance with the invention that have the advantages of a one-component storage-stable system that requires only heat for activation; the cured composition is useful in preparing a wide variety of coatings and castings.

In a particularly preferred form of the invention, the polymer composition may include at least one additional component that is a reinforcing agent and/or a filler. The cured plastics products feature improved impact properties and are suitable for many of the same utilities as thermoset polyester resin compositions, such as parts for automotive bodies.

The polyurethane oligomer utilized according to the invention is prepared by first reacting an organic polyisocyanate prepolymer with an isocyanate-reactive-group-containing unsaturated monomer using standard procedures and in such proportions as to yield an isocyanate-terminated prepolymer of controlled molecular weight having a free NCO content ranging from about 0.5% to about 30%. Preferably the prepolymer has a free NCO content ranging from about 5% to about 20%. In a preferred procedure, the reaction is accelerated by a catalyst, although the reaction may be carried out in the absence of a catalyst. Common urethane catalysts, e.g., tertiary amines and metal compounds such as stannous octoate or dibutyltin dilaurate, may be used. In forming the prepolymer, it is also preferred to include chain extenders, which are well known to those skilled in the polyurethane art, in the reaction mixture. These chain extenders include low molecular weight glycols such as ethylene glycol, butane diol, hexane diol, propylene glycol and bisphenol A. Other suitable chain extenders are polyether polyols, or mixture of polyols, having an average equivalent weight ranging from about 400 to about 4,000 and an average functionality of about 2. The amount of chain extender can vary broadly depending upon the amount of polyol reactant used in preparing the polyurethane oligomer.

The polyol reactant used in the prepolymer formation is selected from polyether polyols and mixtures of two or more such compounds. The polyol, or mixture of polyols, should have an average equivalent weight ranging from about 75 to about 500. Preferably, the average equivalent weight is about 100 to about 200. The average functionality of the polyol or polyol blend is at least about 3, and preferably 3 to 8.

2

Suitable polyether polyols include various polyoxyalkylene polyols and mixtures thereof. These can be prepared, according to well-known methods, by condensing an alkylene oxide, or a mixture of alkylene oxides using random or step-wise addition, with a polyhydric initiator or a mixture of polyhydric initiators. Illustrative alkylene oxides include ethylene oxide, propylene oxide, butylene oxide, amylene oxide, aralkylene oxides such as styrene oxide, and the halogenated alkylene oxides such as trichlorobutylene oxide and so forth. The most preferred alkylene oxide is propylene oxide or a mixture thereof with ethylene oxide using random or step-wise oxyalkylation.

The polyhydric initiator used in preparing the polyether polyol reactant comprises a mono- or disaccharide or derivative thereof (or a mixture thereof), such as sucrose, dextrose, sorbitol or pentaerythritol, methyl glucoside.

A preferred group of polyhydric initiators for use in preparing the polyether polyol reactant is one which comprises mixtures of sucrose or dextrose with an aliphatic triol, preferably glycerol.

The alkylene oxide-polyhydric initiator condensation reaction is preferably carried out in the presence of a catalyst such as KOH as is well known in the art. In effecting the reaction, a sufficient proportion of alkylene oxide is used, so as to provide a final polyol product having an average equivalent weight of about 75 to about 500, preferably about 100 to about 200. The catalyst is thereafter preferably removed, leaving a polyether polyol which is ready for use in preparing the isocyanate-terminated prepolymer of the invention.

The organic polyisocyanates used in the polyurethane prepolymer formation include toluene diisocyanate, such as the 80:20 or the 65:35 isomer mixture of the 2,4- and 2,6-isomeric forms, ethylene diisocyanate, propylene diisocyanate, methylenebis-(4-phenyl isocyanate), xylene diisocyanate, 3,3'-bitoluene-4,4'-diisocyanate, hexamethylene diisocyanate, naphthalene 1,5-diisocyanate, the polymeric isocyanates such as polyphenylene polymethylene isocyanate, and mixtures thereof. Toluene diisocyanate is preferred.

To form the polyurethane oligomer that is utilized according to the invention, the prepared isocyanate-terminated prepolymer, as defined above, is then reacted with an isocyanate-reactive-group-containing unsaturated monomer. The reaction is carried out using methods well known in the art and employing such relative proportions of the reactants so as to achieve an oligomer product having a final free NCO content of from 0% to about 20%, preferably 0% to about 10%, and most preferably 0% to about 5%. Suitable reactive group-containing unsaturated monomers include unsaturated acrylates and unsaturated amides such as hydroxyethyl acrylate, hydroxypropyl acrylate, hydroxyethyl methacrylate, hydroxyethyl acrylamide, t-butylaminoethyl methacrylate and N-(isobutoxymethyl) acrylamide. By reaction of the isocyanate-terminated prepolymer with the unsaturated monomer, a controlled molecular weight urethane oligomer with terminal reactive unsaturation is produced. Preferably, the reaction is carried out in the presence of a reactive copolymerizable solvent. Suitable copolymerizable solvents include vinylidene compounds such as styrene, vinyl toluene, methacrylic esters, acrylic esters and divinyl benzene, familiar to those skilled in the art. The amount of copolymerizable solvent employed may be varied over a wide range. Generally, however, the copolymerizable solvent is employed in an amount of from about 0 to about 100 parts by weight per 100 parts by weight of the urethane oligomer of the present invention.

The modified urethane oligomer liquid polymer system is polymerized and cured in the presence of a heat activated free-radical-generating catalyst. The actual curing temperature is dependent on the particular catalyst employed. Suitable free radical catalysts include peroxide or azo type compounds, known to those in the art. Typical peroxide catalysts are illustrated by organo peroxides and hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide and t-butyl peroctoate. Typical azo compounds are azobisisobutyronitrile, 2-t-butylazo-2-cyano-4-methylpentane, and 4-t-butylazo-4-cyano-valeric acid. The preferred catalysts are peroxide catalysts. In particular, preferred peroxide catalysts are t-butyl peroctoate, t-butyl perbenzoate, and mixtures thereof. Any suitable catalytic amount may be employed; however, the catalyst generally is used in an amount from about 0.1 to about 10 parts by weight per 100 parts by weight of the oligomer.

The composition of the present invention may also contain other standard ingredients, if desired, such as fillers (e.g., finely divided solids including $CaCO_3$, clay, alumina, talc or glass microspheres) and reinforcement materials (e.g., chopped fiberglass, carbon fibers, asbestos fibers or boron nitride whiskers). Other ingredients may include internal mold release agents, such as calcium, zinc, magnesium, or sodium stearate. Pigments, dyes, stabilizers, viscosity modifiers (e.g., Group II metal oxides and hydroxides, such as magnesium oxide) and various additives familiar to those skilled in thermosetting polyester technology also may be added. Other low shrink or impact additives also may be included, if desired. A typical formulation generally contains, per 100 parts by weight of the polyurethane oligomer, reinforcement materials in an amount ranging from about 10 to about 150 parts by weight and from about 20 to about 400 parts by weight of fillers.

The following examples are provided to further illustrate the invention. All parts are by weight unless otherwise specified.

3

Preparation of polyurethane oligomer

Example 1

To 348 grams (4.0 eq.) of diisocyanate and 0.2 ml of stannous octoate was added dropwise with stirring 562 grams of styrene and 147 grams (1 eq.) of a polyether polyol over a two-hour period. The mixture was heated to 80°C for one hour, then cooled to 60°C and 348 grams (3 eq.) of a hydroxyethyl acrylate was added. The mixture was again heated to 80°C for one hour, and then cooled to room temperature. Next, 500 ppm of hydroquinone was added to the fluid mixture.

The polyether polyol used had a molecular weight of about 650 and was prepared by condensing a dextrose/glycerol mixture with propylene oxide to a final hydroxyl number of about 375. The diisocyanate was a mixture of toluene diisocyanate isomers (80:20 mixture of 2,4/2,6-isomers).

Examples 2—4

Additional polyurethane oligomers were prepared employing the same conditions as outlined in Example 1. However, different proportions of reactants were used to form prepolymers. These prepolymers were reacted with suitable proportions of hydroxyl-containing unsaturated monomers to produce oligomers according to the invention. Table I outlines the oligomer compositions prepared according to Examples 1—4.

Example 5

The procedure of Example 1 was followed, except that different proportions of reactants were used and diisocyanate was added dropwise to the mixture of polyether polyol and styrene. The oligomer composition which was prepared is outlined in Table I.

TABLE I

Oligomer compositions

| Example | Polyols (eq.) | | Unsaturated Monomer[3] (eq.) | Diisocyanate[4] (eq.) | Styrene (grams) | Hydroquinone (ppm) |
|---|---|---|---|---|---|---|
| | A[1] | B[2] | | | | |
| 1 | 1.0 | 0 | 3.0 | 4.0 | 562 | 500 |
| 2 | 0 | 1.0 | 3.0 | 4.0 | 562 | 500 |
| 3 | 1.0 | 0 | 1.5 | 2.5 | 359 | 500 |
| 4[5] | 0 | 1.0 | 1.5 | 2.5 | 331 | 500 |
| 5 | 1.0 | 0 | 1.5 | 2.5 | 359 | 500 |

[1]Polyol A is a polyether polyol having a molecular weight of about 650 and was prepared by condensing a dextrose/glycerol mixture with propylene oxide to a final hydroxyl number of about 375.
[2]Polyol B is a polyether polyol having a molecular weight of about 480 and was prepared by condensing a sucrose/glycerol mixture with propylene oxide to a final hydroxyl number of about 530.
[3]Hydroxyethyl acrylate.
[4]The diisocyanate is a mixture of toluene diisocyanate isomers (80:20 mixture of 2,4/2,6-isomers).
[5]The viscosity (25°C) of the oligomer composition was 2,200 cps after three days and increased to 3,800 cps after one week.

Example 6

174 grams (2.0 eq.) of diisocyanate and 253 grams of styrene were mixed together in a one-liter, round bottom flask equipped with mechanical stirrer, thermometer and dropping funnel. 52.5 grams (0.5 eq.) of a polyether polyol and 36.5 grams (0.5 eq.) of a chain extender were mixed and were added to the diisocyanate-styrene mixture in a dropwise fashion over a period of 110 minutes. The reaction temperature rose from 27° to 47°C during the addition period. The reaction mixture was stirred at ambient conditions for two hours, after which 0.3 ml of stannous octoate was added. The reaction temperature went from 43° to 56°C and the reaction mixture was stirred one additional hour. 116 grams of hydroxyethyl acrylate was added in a dropwise fashion over a period of 15 minutes. No change in reaction temperature was noted during the addition of hydroxyethyl acrylate. The reaction mixture was stirred at 80°C for one hour when an IR spectrum showed —NCO and —OH absorptions. The reaction mixture was allowed to stand overnight at room temperature. The reaction mixture still showed a slight —NCO absorption so heating at 80°C was continued for an additional two hours. At this point, no —NCO absorption was observed by IR, however, a strong (NH) absorption was present. The reaction mixture was bottled. The sample was used to make molded parts. The sample did not change in appearance after one month—it remained a hazy, fluid solution. (Viscosity [25°C] 3,200 mPa.s).

4

The polyether polyol used had a molecular weight of about 480 and was prepared by condensing a sucrose/glycerol mixture with propylene oxide to a final hydroxyl number of about 530. The diisocyanate was a mixture of toluene diisocyanate isomers (80:20 mixture of 2,4/2,6-isomers). The chain extender was 2-ethyl-1,3-hexane diol.

Example 7

174 grams of diisocyanate and 251 grams of styrene were mixed together in a one-liter, round bottom flask equipped with thermometer, mechanical stirrer and addition funnel. 52.5 grams (0.5 eq.) of a polyether polyol and 33.5 grams (0.5 eq.) of a chain extender were mixed together and added to the diisocyanate-styrene mixture in a dropwise manner over a period of 1½ hours. The reaction temperature rose from 24° to 35°C during the addition period. The reaction mixture was stirred at ambient temperature for one hour, after which 0.3 ml of stannous octoate was added to the mixture—the reaction temperature rose from 32° to 69°C. The reaction mixture was stirred for an additional two hours at ambient temperature. 116 grams (1.0 eq.) of hydroxyethyl acrylate was added to the reaction mixture over a period of 10 minutes. No exotherm was observed. The reaction mixture was heated for 1½ hours at 80°C and then allowed to stand overnight. An IR spectrum showed only a trace of —NCO, and the hazy yellow liquid was bottled. (Viscosity [22°C] 3,600 mPa.s)

The polyether polyol used had a molecular weight of about 480 and was prepared by condensing a sucrose/glycerol mixture with propylene oxide to a final hydroxyl number of 530. The diisocyanate was a mixture of toluene diisocyanate isomers (80:20 mixture of 2,4/2,6-isomers). The chain extender was dipropylene glycol.

Example 8

To 87.0 grams (1.0 eq.) of diisocyanate, 141.8 grams of styrene and 0.71 grams of hydroquinone was added dropwise with stirring a mixture of 36.7 grams (0.25 eq.) of a polyether polyol and 24.0 grams (0.25 eq.) of a chain extender over a period of 45 minutes. The reaction temperature rose from 18° to 23°C, and the mixture was stirred without heating for 75 minutes. To this mixture was added dropwise with stirring 65.0 grams (0.5 eq.) of hydroxypropyl acrylate over a period of 25 minutes. The resulting mixture was stirred for 60 minutes without heating, when 0.68 ml of dibutyltin dilaurate was added. The reaction temperature climbed from 24° to 52°C within five minutes. The mixture was then heated to 70°C and was stirred at 70°C for three hours. The product had a viscosity of 1,100 mPa.s at 26°C.

The polyether polyol used had a molecular weight of about 650 and was prepared by condensing a dextrose/glycerol mixture with propylene oxide to a final hydroxyl number of about 375. The diisocyanate was a mixture of toluene diisocyanate isomers (80:20 mixture of 2,4/2,6-isomers). The chain extender was tripropylene glycol.

Example 9

The procedure of Example 8 was followed, except that 58 grams (0.5 eq.) of hydroxyethyl acrylate was used in place of hydroxypropyl acrylate, and 137.1 grams of styrene was used.

Example 10

To 174 grams (2.0 eq.) of diisocyanate in a one-liter, round bottom flask were added dropwise with stirring a mixture of 105 grams (1.0 eq.) of a polyether polyol and 273 grams of styrene over a period of four hours. The reaction temperature rose from 22° to 26°C during the addition period. After the reaction mixture was allowed to stand at room temperature overnight, 130 grams (1.0 eq.) of hydroxypropyl acrylate was added to the mixture over a period of 30 minutes. The reaction temperature rose from 22° to 26°C within one hour of the addition. The reaction mixture was again allowed to stand overnight, after which 0.4 ml of stannous octoate was added. The mixture was again allowed to stand overnight, and was then heated at 70°C for four hours with stirring. The resulting homogeneous liquid had a viscosity of 41,000 mPa.s at 25°C.

The polyether polyol used had a molecular weight of about 480 and was prepared by condensing a sucrose/glycerol mixture with propylene oxide to a final hydroxyl number of 530. The diisocyanate was a mixture of toluene diisocyanate isomers (80:20 mixture of 2,4/2,6-isomers).

Example 11

To 348 grams (4.0 eq.) of diisocyanate, 569 grams of styrene, and 0.142 grams of hydroquinone in a two-liter, round bottom flask was added dropwise with stirring a mixture of 235.0 grams (0.8 eq.) of a polyether polyol and 38.4 grams (0.2 eq.) of a chain extender over a period of one hour. The reaction temperature rose from 23° to 30°C during the addition period. The mixture was stirred without heating for one hour, after which 232 grams (2.0 eq.) of hydroxyethyl acrylate was added to the mixture over a period of 30 minutes. The resulting mixture was stirred without heating for one hour and 2.84 grams of dibutyltin dilaurate was added. The mixture was then heated to 70°C and was stirred at 70°C for a period of three hours. The resulting oligomer had a viscosity of 4,800 mPa.s at 23°C.

The polyether polyol used had a molecular weight of about 650 and was prepared by condensing a dextrose/glycerol mixture with propylene oxide to a final hydroxyl number of about 375. The diisocyanate was a mixture of toluene diisocyanate isomers (80:20 mixture of 2,4/2,6-isomers). The chain extender was tripropylene glycol.

Example 12

To 255.6 grams of diisocyanate, 479 grams of styrene, and 0.12 grams of hydroquinone in a two-liter round-bottom flask was added dropwise with stirring a mixture of 43.2 grams of a polyether polyol and 249.0 grams of a chain extender over a period of one hour. The reaction temperature rose from 23° to 26°C during the addition period. The mixture was stirred without heating for one hour, after which 170.6 grams of hydroxyethyl acrylate was added to the mixture over a period of 30 minutes. The reaction temperature rose from 28° to 33°C during this addition period. The resulting mixture was stirred without heating for one hour and 2.4 grams of dibutyltin dilaurate was added. The mixture was then heated to 70°C and was stirred at 70°C for a period of three hours. The resulting oligomer had a viscosity of 285 mPa.s at 24°C.

The polyether polyol used had a molecular weight of about 650 and was prepared by condensing a dextrose/glycerol mixture with propylene oxide to a final hydroxyl number of about 375. The diisocyanate was a mixture of toluene diisocyanate isomers (80:20 mixture of 2,4/2,6-isomers). The chain extender was a polyether polyol having a molecular weight of about 425 and being prepared by propoxylating dipropylene glycol to a final hydroxyl number of about 265.

Example 13

To 196.6 grams of diisocyanate, 598.8 grams of styrene, and 0.15 grams of hydroquinone in a two-liter round-bottom flask was added dropwise with stirring a mixture of 94.95 grams of a polyether polyol and 459.6 grams of a chain extender over a period of 68 minutes. The reaction temperature rose from 22° to 26°C during the addition period. The mixture was stirred without heating for one hour, after which 147 grams of hydroxypropyl acrylate was added to the mixture over a period of 30 minutes. The resulting mixture was stirred without heating for one hour and 3.0 grams of dibutyltin dilaurate was added. The mixture was then heated to 70°C and was stirred at 70°C for a period of three hours. The resulting oligomer had a viscosity of 1,080 mPa.s at 25°C.

The polyether polyol used had a molecular weight of about 480 and was prepared by condensing a sucrose/glycerol mixture with propylene oxide to a final hydroxyl number of about 530. The diisocyanate was a mixture of toluene diisocyanate isomers (80:20 mixture of 2,4/2,6-isomers). The chain extender was a polyether polyol having a molecular weight of about 4,000 and being prepared by propoxylating dipropylene glycol to a final hydroxyl number of about 28.

Preparation of urethane moldings
Examples 14—24

Test panels were prepared containing varying amounts of polyurethane oligomer prepared according to Examples 1, 4 and 6. The urethane molding formulations used are listed in Tables II and III below. The following procedure was followed in the preparation of the cured composites.

a. Into a high shear mixing device were added the urethane oligomer, styrene, other monomers, low shrink additive, catalyst and pigments.

b. The filler was added gradually and mixed until a homogeneous paste was obtained.

c. Next chopped fiberglass was gradually added to the paste in a two-roll mill (or Baker Perkins mixer or Ross Double Planetary mixer) and the mix was worked the minimal length of time to achieve good wet out of the glass without significant breakdown.

d. The uncured mix was then placed in a mold between the platens of a compression molding machine and cured under pressure (about 14 MPa) for three minutes at 149—163°C.

Alternatively to (d), the mixture may be added by a hopper device to the screw system of an injection molding device to produce an injection molded part, or the mix may be made up on an SMC machine for later compression or injection molding.

The physical properties of panels prepared in this manner are included in Table IV below. The physical properties were determined in accordance with standard test procedures: Flexural modulus and flexural strength—ASTM D790; tensile strength—ASTM D3574; izod—ASTM D256; and coefficient of thermal expansion—ASTM D696.

TABLE II

Urethane moulding formulation (SMC/BMC[1]

| Component | Parts by weight |
|---|---|
| Polyurethane oligomer | 65 (40% styrene) |
| Tertiary butyl perbenzoate | 0.5 |
| Tertiary butyl peroctoate[1] | 0.5 |
| Zinc stearate | 3.0 |
| Calcium carbonate | 150 |
| Carbon black | 5.0 |
| Magnesium oxide | 1.8 |
| 1/2 inch (1.27 cm) glass | 101 |
| Styrene and low shrink additive[2] | 35 |

[1]Commercially available from Lupersol Co. under the designation PDO, understood to consist of 50% tertiary butyl peroctoate and 50% dioctyl phthalate.
[2]The additions of low shrink additive replace styrene maintaining the sum of additive and styrene constant at 35 parts.

TABLE III

Urethane molding formulation (SMC/BMC)[2]

| Component | Parts by weight |
|---|---|
| Polyurethane oligomer | 65 (40% styrene) |
| Tertiary butyl perbenzoate | 0.5 |
| Tertiary butyl peroctoate[1] | 0.5 |
| Zinc stearate | 3.0 |
| Calcium carbonate | 150 |
| Carbon black | 5.0 |
| Magnesium oxide | 1.8 |
| 1/2 inch (1.27 cm) glass | 101 |
| Styrene | 35 |
| Low shrink additive[2] | 0—25 |

[1]Commercially available from Lupersol Co. under the designation PDO, understood to consist of 50% tertiary butyl peroctoate and 50% dioctyl phthalate.
[2]Low shrink additive is added in increments to the standard formulation.

TABLE IV
Physical properties of cured urethane oligomers

| Example | Oligomer | Formulation | Additives/pph urethanes | Tensile strength (psi) | Flex. strength (psi) | Flex. modulus× $10^6$ (psi) | Izod (ft.-lb./in.) | | Coeff. of thermal expansion Mcm/cm/°C |
|---|---|---|---|---|---|---|---|---|---|
| | | | | | | | Notched | Unnotched | |
| 14 | Polyester resin[1] | 1 | LP-40A[2]/7.8 Olin low shrink[3]/10 | 4080 | — | 1.06 | 3.94 | — — | — — |
| 15 | Example 1 | 1 | Ethylene dimethyl acrylate Olin low shrink[3]/10 | 4546 | — | 1.26 | 5.16 | — | — |
| 16 | Example 1 | 1 | Polyester resin[1] | 5355 | — | 0.80 | 5.84 | — | — |
| 17 | Polyester resin[1] | 2 | — | 6817 | 15,000 | 1.0 | 8.7 | 10.6 | — |
| 18 | Example 4 | 2 | — | 4577 | 19,000 | 1.1 | 8.9 | 12.4 | 15.8 |
| 19 | Example 4 | 2 | LP-40A[2]/14.0 | 3528 | 7,000 | 0.9 | 2.5 | 5.6 | 14.2 |
| 20 | Example 4 | 2 | Olin low shrink[3]/5 | 7705 | 16,000 | 0.9 | 9.7 | 12.5 | 13.1 |
| 21 | Example 4 | 2 | Olin low shrink[3]/10 | 4563 | 7,000 | 0.6 | 9.1 | 10.6 | 11.4 |
| 22 | Example 4 | 2 | Olin low shrink[3]/15 | 6635 | 6,000 | 0.5 | 8.8 | 9.2 | 12.5 |
| 23 | Example 4 | 2 | Olin low shrink[3]/20 | 4254 | 6,000 | 0.6 | 6.6 | 8.9 | 14.2 |
| 24 | Example 4 | 2 | Olin low shrink[3]/25 | 3434 | 6,000 | 0.5 | 11.1 | 15.0 | 15.1 |

[1]Commercially available from Hatco under the designation GR 13031.

[2]LP-40A is a low shrink additive commercially available from Union Carbide.

[3]The Olin low shrink additive was prepared by first mixing together 391 grams (0.2 eq.) of polyether polyol and 178 grams of styrene solvent (30% by weight of final material). 0.2 Ml of stannous octoate was added to the mixture followed by 0.24 eq. (21 grams) of diisocyanate added in one portion at ambient temperature. After several minutes, the exotherm had reached 35—37°C and external heat was applied. The reaction mixture was stirred at 70°C for one hour. 0.04 Eq. (4.64 grams) of hydroxyethyl acrylate was added and the reaction mixture was stirred for one additional hour at 70°C.

The polyether polyol used had a molecular weight of about 4,000 and was prepared by end-capping a propoxylated dipropylene glycol precursor with ethylene oxide to a final hydroxyl number of about 28.05. The diisocyanate was a mixture of toluene diisocyanate isomers (80:20 mixture of 2,4/2,6-isomers).

The non-metric figures are converted to metric units in Table IVa below to comply with Rule 35(12) of the Implementing Regulations.

Preparation of urethane moldings

Examples 25—31

Test panels were prepared containing varying amounts of polyurethane oligomer prepared according to Examples 6 and 10—13. The following procedure was followed in the preparation of the cured panels.

a. The polyurethane oligomer was mixed with the free radical generating catalyst, and the resulting mixture was degassed by placement in a vacuum desiccator at 1—10 torr (133—1333 Pa) pressure for a period of approximately 1—2 minutes or until initial foaming subsides.

b. The degassed mixture was poured into a mold formed by glass plates coated with a liquid mold release agent, such as MR515 commercially available from Greenchem Products, Inc., and held apart by 0.16 cm spacers.

c. The mold was then placed under conditions appropriate for curing, and after completion of the curing cycle, the panels were demolded and tested.

The physical properties of panels prepared in this manner are included in Table V below. The physical properties were determined in accordance with standard test procedures: Flexural modulus and flexural strength—ASTM D790; tensile strength—ASTM D3574; izod—ASTM D256; and coefficient of thermal expansion—ASTM D696.

TABLE V
Physical properties of cured urethane oligomers

| Example | Oligomer | Tensile strength (psi) | Flex. strength (psi) | Flex. modulus× 10$^6$ (psi) | Izod (ft.-lb./in.) | |
|---|---|---|---|---|---|---|
| | | | | | Notched | Unnotched |
| 25[1] | Example 6 | 4840 | 12,500 | 0.502 | 0.64 | 1.44 |
| 26[1] | Example 10 | 6780 | 15,600 | 0.477 | — | 1.27 |
| 27[2] | Example 6 | 5590 | 10,990 | 0.379 | 2.04 | 3.21 |
| 28[2] | Polyester resin[4] | 3190 | 8,510 | 0.378 | 2.63 | 2.54 |
| 29[1] | Example 11 | 6260 | 7,660 | 0.551 | 2.49 | 5.19 |
| 30[3] | Example 12 | 9220 | 12,200 | 0.418 | 2.36 | 6.59 |
| 31[3] | Example 13 | 2480 | 1,960 | 0.069 | 3.11 | 10.75 |

[1]Panels prepared using 0.5% tertiary butyl peroctoate (commercially available from Lupersol Co. under the designation PDO, understood to consist of 50% tertiary butyl peroctoate and 50% dioctyl phthalate) and 0.5% tertiary butyl perbenzoate as initiator, and cured at 120°C for a period of one hour

[2]Panels prepared with 1.0% methyl ethyl ketone peroxide as initiator and 0.2% cobalt naphthenate (6% mineral spirits) as an accelerator, and cured overnight at ambient temperature.

[3]Panels prepared using 1.0% tertiary butyl peroctoate (commercially available from Lupersol Co. under the designation PDO, understood to consist of 50% tertiary butyl peroctoate and 50% dioctyl phthalate) as initiator, and cured at 120°C for a period of one hour.

[4]Commercially available from Hatco under the designation GR 13031.

The non-metric figures are converted to metric units in Table Va below to comply with Rule 35(12) of the Implementing Regulations.

# 0 051 476

Physical properties of cured urethane oligomers

## TABLE IVa

| Example | Tensile strength (MPa) | Flex. strength (MPa) | Flex. modulus (GPa) | Izod (J/m.) | |
|---|---|---|---|---|---|
| | | | | Notched | Unnotched |
| 14 | 28.1 | — | 7.3 | 210 | — |
| 15 | 31.3 | — | 8.7 | 275 | — |
| 16 | 36.9 | — | 5.5 | 312 | — |
| 17 | 47.0 | 103 | 6.9 | 464 | 566 |
| 18 | 31.6 | 131 | 7.6 | 475 | 662 |
| 19 | 24.3 | 48 | 6.2 | 133 | 299 |
| 20 | 53.1 | 110 | 6.2 | 518 | 667 |
| 21 | 31.5 | 48 | 4.1 | 486 | 566 |
| 22 | 45.7 | 41 | 3.4 | 470 | 491 |
| 23 | 29.3 | 41 | 4.1 | 352 | 475 |
| 24 | 23.7 | 41 | 3.4 | 593 | 801 |

## TABLE Va

| Example | Tensile strength (MPa) | Flex. strength (MPa) | Flex. modulus (GPa) | Notched | Unnotched |
|---|---|---|---|---|---|
| 25 | 33.4 | 86 | 3.46 | 34 | 77 |
| 26 | 46.7 | 108 | 3.29 | — | 68 |
| 27 | 38.5 | 76 | 2.61 | 109 | 171 |
| 28 | 22.0 | 59 | 2.61 | 140 | 136 |
| 29 | 43.1 | 53 | 3.80 | 133 | 277 |
| 30 | 63.6 | 84 | 2.88 | 126 | 352 |
| 31 | 17.1 | 13.5 | 0.48 | 166 | 574 |

## Claims

1. A polyurethane liquid polymer composition comprising a urethane oligomer and a heat-activatable free-radical-generating catalyst, characterized in that the urethane oligomer has a final free NCO content from 0% to 20% and has been prepared by reacting:

(a) an isocyanate-terminated prepolymer having a final free NCO content in the range from 0.5% to 30% and that is the product of reacting an organic polyisocyanate with a polyether polyol having an average equivalent weight in the range 75 to 500 and an average functionality of at least about 3, the polyether polyol having been prepared by reacting an alkylene oxide, or a mixture of alkylene oxides, with a polyhydric initiator comprising a mono- or di-saccharide or derivative thereof, with

(b) an isocyanate-reactive-group-containing (meth)acrylate monomer or isocyanate-reactive-group-containing terminally unsaturated amide monomer.

2. A composition according to Claim 1, including at least one reinforcing agent and/or at least one filler.

3. A composition according to Claim 2, in which from 20 to 400 parts by weight of filler is included per 100 parts by weight of urethane oligomer.

4. A composition according to Claim 2 or 3, in which from 10 to 150 parts by weight of reinforcing agent is included per 100 parts by weight of urethane oligomer.

5. A composition according to any one of Claims 1 to 4, including a copolymerizable solvent, preferably styrene.

10

6. A composition according to any one of Claims 1 to 5, in which the urethane oligomer has a final free NCO content in the range from 0% to 10%.

7. A composition according to any one of Claims 1 to 6, in which the isocyanate-terminated prepolymer has a final free NCO content in the range from 5% to 20%, and the urethane oligomer has a final free NCO content in the range from 0% to 5%.

8. A composition according to any one of Claims 1 to 7, in which the unsaturated monomer is hydroxyethyl acrylate, hydroxypropyl acrylate, hydroxyethyl methacrylate, hydroxyethyl acrylamide, t-butylaminoethyl methacrylate or N-(isobutoxymethyl) acrylamide.

9. A composition according to any one of Claims 1 to 8, in which the catalyst is a peroxide catalyst, preferably *t*-butyl perbenzoate or *t*-butyl peroctoate or a mixture thereof.

10. A composition according to Claim 1, in which the polyol has an average equivalent weight in the range 100 to 200 and has been prepared by reacting (a) a mixture of sucrose and/or dextrose with an aliphatic triol with (b) propylene oxide or a mixture of propylene oxide with ethylene oxide.

11. A composition according to any one of Claims 1 to 10, in which the urethane oligomer further comprises a chain extending agent, preferably 2-ethyl-1,3-hexane diol, dipropylene glycol or tripropylene glycol.

12. A composition according to any one of Claims 1 to 11, in which the said organic polyisocyanate is toluene diisocyanate.

13. A process for preparing a polyurethane polymer product comprising mixing a urethane oligomer and a heat-activated free-radical-generating catalyst, and then heating the resulting mixture at a temperature adequate to activate the catalyst and cure the mixture, the urethane oligomer having a final free NCO content from 0% to 20% and having been prepared in the manner defined in Claim 1.

14. A process according to Claim 13 in which the polyol has an average equivalent weight in the range 100 to 200, the isocyanate-terminated prepolymer has a final free NCO content in the range 5% to 20%, and the urethane oligomer has a final free NCO content in the range 0% to 5%.

15. A process according to Claim 13 or 14 in which the isocyanate-terminated prepolymer further comprises a chain extending agent.

16. A process according to Claims 13, 14 or 15, in which the urethane oligomer and the said catalyst are also mixed with a reinforcing agent and/or a filler to a homogeneous blend before the mixture is heated to cure it.

**Patentansprüche**

1. Flüssige Polyurethanpolymermasse, die ein Urethanoligomer und einen durch Hitze aktivierbaren, freie Radikale erzeugenden Katalysator umfaßt, dadurch gekennzeichnet, daß das Urethanoligomer einen Endgehalt an freiem NCO von 0% bis 20% hat und durch Umsetzung

a) eines Copolymers mit Isocyanatendgruppen und mit einem Endgehalt an freiem NCO im Bereich von 0,5% bis 30%, welches das Produkt einer Umsetzung eines organischen Polyisocyanates mit einem Polyetherpolyol mit einem mittleren Äquivalentgewicht im Bereich von 75 bis 500 und einer mittleren Funktionalität von wenigstens etwa 3 ist, wobei das Polyetherpolyol durch Umseztung eines Alkylenoxids oder eines Gemisches von Alkylenoxiden mit einem mehrwertigen Initiator, der ein Mono- oder Disaccharid oder ein Derivat hiervon umfaßt, hergestellt wurde, mit

b) einem eine mit Isocyanat reagierende Gruppe enthaltenden Methacrylat- oder Acrylatmonomer oder einem eine mit Isocyanat reagierende Gruppe enthaltenden endständig ungesättigten Amidmonomer hergestellt wurde.

2. Masse nach Anspruch 1, die wenigstens ein Verstärkungsmittel und/oder wenigstens einen Füllstoff enthält.

3. Masse nach Anspruch 2, in der 20 bis 400 Gewichtsteile Füllstoff je 100 Gewichsteile Urethanoligomer enthalten sind.

4. Masse nach Anspruch 2 oder 3, in der 10 bis 150 Gewichtsteile Verstärkungsmittel je 100 Gewichtsteile Urethanoligomer enthalten sind.

5. Masse nach einem der Ansprüche 1 bis 4, die ein copolymerisierbares Lösungsmittel, vorzugsweise Styrol, enthält.

6. Masse nach einem der Ansprüche 1 bis 5, in welcher das Urethanoligomer einen Endgehalt an freiem NCO in Bereich von 0% bis 10% hat.

7. Masse nach einem der Ansprüche 1 bis 6, in der das Vorpolymer mit Isocyanatendgruppen einen Endgehalt an freiem NCO im Bereich von 5% bis 20% hat und das Urethanoligomer einen Endgehalt an freiem NCO in Bereich von 0% bis 5% hat.

8. Masse nach einem der Ansprüche 1 bis 7, in der das ungesättigte Monomere Hydroxyethylacrylat, Hydroxypropylacrylat, Hydroxyethylmethacrylat, Hydroxyethylacrylamid, tert-Butylaminoethylmethacrylat oder N-(Isobutoxymethyl)-acrylamid ist.

9. Masse nach einem der Ansprüche 1 bis 8, in der der Katalysator ein Peroxidkatalysator, vorzugsweise tert-Butylperbenzoat oder tert-Butylperoctoat oder ein Gemisch hiervon ist.

10. Masse nach Anspruch 1, in der das Polyol ein mittleres Äquivalentgewicht im Bereich von 100 bis 200 besitzt und durch Umsetzung a) eines Gemisches von Saccharose und/oder Dextrose mit einem

11

aliphatischen Triol mit b) Propylenoxid oder einem Gemisch von Propylenoxide mit Ethylenoxid hergestellt wurde.

11. Masse nach einem der Ansprüche 1 bis 10, in der das Urethanoligomer außerdem ein Kettenverlängerungsmittel, vorzugsweise 2-Ethyl-1,3-hexandiol, Dipropylenglycol oder Tripropylenglycol, enthält.

12. Masse nach einem der Ansprüche 1 bis 11, in der das organische Polyisocyanat Toluoldiisocyanat ist.

13. Verfahren zur Herstellung eines Polyurethanpolymerpropduktes, bei dem man eine Urethanoligomer une einen durch Hitze aktivierbaren, freie Radikale erzeugenden Katalysator vermischt und dann das resultierende Gemisch auf eine solche Temperatur erhitzt, daß der Katalysator aktiviert und das Gemisch gehärtet wird, wobei das Urethanoligomer einen Endgehalt in freiem NCO von 0% bis 20% hat und in der in Anspruch 1 definierten Weise hergestellt wurde.

14. Verfahren nach Anspruch 13, bei dem das Polyol ein mittleres Äquivalentgewicht im Bereich von 100 bis 200 besitzt, das Vorpolymer mit Isocyanatendgruppen einen Endgehalt an freiem NCO im Bereich von 5% bis 20% hat und das Urethanoligomer einen Endgehalt an freiem NCO im Bereich von 0% bis 5% hat.

15. Verfahren nach Anspruch 13 oder 14, bei dem das Vorpolymer mit Isocyanatendgruppen außerdem ein Kettenverlängerungsmittel enthält.

16. Verfahren nach den Ansprüchen 13, 14 oder 15, bei dem das Urethanoligomer und der Katalysator auch mit einem Verstärkungsmittel und/oder einem Füllstoff zu einem homogenen Gemisch vermischt werden, bevor das Gemisch zu seiner Härtung erhitzt wird.

**Revendications**

1. Une composition de polymère liquide de type polyuréthane comprenant un oligomère d'uréthane et un catalyseur activable par la chaleur, produisant des radicaux libres, caractérisée en ce que l'oligomère d'uréthane a une teneur finale en NCO libre de 0% à 20% et a été préparé par réaction de:

a) un prépolymère à terminaison isocyanate ayant une teneur finale en NCO libre dans la gamme de 0,5% à 30% et qui est le produit de la réaction d'un polyisocyanate organique avec un polyéther-polyol ayant un poids équivalent moyen dans la gamme de 75 à 500 et une fonctionnalité moyenne d'au moins environ 3, le polyéther-polyol ayant été préparé par réaction d'un oxyde d'alkylène ou d'un mélange d'oxydes d'alkylène avec un amorceur polyhydroxylé comprenant un mono- ou un dissacharide ou leurs dérivés, avec

b) un (méth)acrélate monomère contenant un groupe réagissant avec les isocyanates ou un amide monomère à insaturation terminale contenant un groupe réagissant avec les isocyanates.

2. Une composition selon la revendication 1 comprenant moins un agent de renfort et/ou au moins une charge.

3. Une composition selon la revendication 2 dans laquelle de 20 à 400 parties en poids d'une charge sont incorporées pour 100 parties en poids d'oligomère d'uréthane.

4. Une composition selon la revendication 2 ou 3 dans laquelle de 10 à 150 parties en poids d'agent de renfort sont incorporées pour 100 parties en poids d'oligomère d'uréthane.

5. Une composition selon l'une quelconque des revendications 1 à 4 comprenant un solvant copolymèrisable, de préférence le styrène.

6. Une composition selon l'une quelconque des revendications 1 à 5 dans laquelle l'oligomère d'uréthane a une teneur finale en NCO libre dans la gamme de 0% à 10%.

7. Une composition selon l'une quelconque des revendications 1 à 6 dans laquelle le prépolymère à terminaison isocyanate a une teneur finale en NCO libre dans la gamme de 5% à 20% et l'oligomère d'uréthane a une teneur finale en NCO libre dans la gamme de 0% à 5%.

8. Une composition selon l'une quelconque des revendications 1 à 7 dans laquelle le monomère insaturé est l'acrylate d'hydroxyéthyle, l'acrylate d'hydroxypropyle, le méthacrylate d'hydroxyéthyle, l'hydroxyéthylacrylamide, le méthacrylate de tert-butylaminoéthyle ou le N-(isobutoxyméthyl)acrylamide.

9. Une composition selon l'une quelconque des revendications 1 à 8 dans laquelle le catalyseur est un catalyseur de type peroxyde, de préférence le perbenzoate de tert-butyle ou le peroctoate de tert-butyle ou un de leurs mélanges.

10. Une composition selon la revendication 1 dans lquelle le polyol a un poids équivalent moyen dans la gamme de 100 à 200 et a été préparé par réaction de (a) un mélange de saccharose et/ou de dextrose avec un triol aliphatique avec (b) de l'oxyde de propylène ou un mélange d'oxyde de propylène et d'oxyde d'éthylène.

11. Une composition selon l'une quelconque des revendications 1 à 10 dans laquelle l'oligomère d'uréthane comprend de plus un agent d'allongement de chaîne, de préférence le 2-éthyl-1,3-hexanediol, le dipropylèneglycol ou le tripropylèneglycol.

12. Une composition selon l'une quelconque des revendications 1 à 11 dans laquelle ledit polyisocyanate organique est le toluène-diisocyanate.

13. Un procédé pour la préparation d'une produit en polymène de type polyuréthane comprenant le mélange d'un oligomère d'uréthane et d'un catalyseur, produisant des radicaux libres, activé par la chaleur, puis le chauffage du mélange obtenu à une température appropriée pour activer le catalyseur et durcir le mélange, l'oligomère d'uréthane ayant une teneur finale en NCO libre de 0% à 20% et ayant été préparé de la façon définie dans la revendication 1.

14. Un procédé selon la revendication 13 dans lequel le polyol a un poids équivalent moyen dans la gamme de 100 à 200, le prépolymère à terminaison isocyanate a une teneur finale en NCO libre dans la gamme de 5% à 20% et l'oligomère d'uréthane a une teneur finale en NCO libre dans la gamme de 0% à 5%.

15. Un procédé selon la revendication 13 ou 14 dans lequel le prépolymère à terminaison isocyanate comprend de plus un agent d'allongement de chaîne.

16. Un procédé selon les revendications 13, 14 ou 15 dans lequel l'oligomère d'uréthane et ledit catalyseur sont également mélangés à un agent de renfort et/ou une charge sous forme d'un mélange homogène avant que le mélange soit chauffé pour être durci.